Europäisches Patentamt

(19) European Patent Office

Office européen des brevets

(11) Numéro de publication: **0 188 928**

**B1**

(12) **FASCICULE DE BREVET EUROPEEN**

(45) Date de publication du fascicule du brevet: **04.07.90**

(21) Numéro de dépôt: **85402290.2**

(22) Date de dépôt: **25.11.85**

(51) Int. Cl.⁵: **G 01 V 1/38**

(54) **Système utilisant un ou plusieurs bateaux télécommandés pour la conduite d'opérations marines.**

(30) Priorité: **06.12.84 FR 8418590**

(43) Date de publication de la demande:
**30.07.86 Bulletin 86/31**

(45) Mention de la délivrance du brevet:
**04.07.90 Bulletin 90/27**

(84) Etats contractants désignés:
**BE DE GB IT NL**

(56) Documents cités:
**EP-A-0 154 968**
**FR-A-2 496 277**
**US-A-3 581 273**
**US-A-3 806 863**
**US-A-3 906 352**

(73) Titulaire: **INSTITUT FRANCAIS DU PETROLE**
**4, Avenue de Bois-Préau**
**F-92502 Rueil-Malmaison (FR)**

(72) Inventeur: **Magneville, Pierre**
**43, rue Eugène Bourdillon**
**F-78540 Vernouillet (FR)**

Courier Press, Leamington Spa, England.

## Description

L'invention a pour objet un système pour la conduite d'opérations sismiques ou océanographiques comportant plusieurs véhicules distincts pour déplacer un ensemble d'émission et de réception d'ondes acoustiques.

Les méthodes de prospection sismique marine comportent généralement l'utilisation d'un ensemble d'émission et de réception d'ondes acoustiques constitué d'une source d'émission d'ondes acoustiques pour émettre dans l'eau des ondes acoustiques qui vont se réfléchir sur les couches réfléchissantes du sous-sol marin et d'au moins une flûte sismiques purvue d'un grand nombre de capteurs, pour recevoir les échos, sur ces couches, des ondes acoustiques émises.

La source d'émission et la flûte sismique sont tractées en immersion par un navire.

Certaines méthodes connues comportent l'utilisation de plusieurs sources sismiques et/ou plusieurs flûtes sismiques tractées derrière un navire unique, certaines d'entre elles étant déportées latéralement par rapport à la route suivie par le navire tracteur, au moyen de dispositifs tels que ceux décrits dans les brevets français 2.296.562 ou 2.523.542.

Un tel mode de remorquage ne convient que pour les applications où les déports latéraux requis sont relativement faibles et où l'ensemble d'émission-réception doit suivre sensiblement la même route que le navire tracteur. De la même façon, l'écart longitudinal entre un dispositif d'émission et un dispositif de réception tractés par un navire unique reste toujours relativement faible.

Par la demande de brevet européen EP-A-0 154 968 publiée le 18 Septembre 1985, est connue une méthode comportant l'utilisation d'un navire principal et d'un ou plusieurs véhicules secondaires télécommandés par radio ou acoustiquement. Diverses possibilités sont indiquées: la transmission de commandes par radio le transfert au navire des données recueillies par les appareils sismiques associés à chaque véhicule secondaire par une liaison radio en temps réel ou de manière différée, le positionnement des véhicules secondaires dans un réseau de navigation local centré sur le navire principal lequel se positionne par rapport à un même réseau général.

Par le brevet US-A-3 906 352, est connu un système de prospection sismique à deux bateaux avec équipage remorquant chacun une source sismique et une flûte, qui sont en liaison radio permanente. Les données sismiques recueillies par l'un des bateaux peuvent être transmises à l'autre par radio, de manière à coordonner les enregistrements effectuées parallèlement et faciliter leur interprétation. Les deux bateaux se positionnent l'un par rapport à l'autre par triangulation en utilisant un dispositif de télémétrie par radar et des transpondeurs disposés sur des bouées en queue des flûtes sismiques.

On connait aussi par le brevet FR-A-2 496 277 C.F.P. un système de prospection sismique marine dans lequel les éléments constitutifs du dispositif d'émission-réception sont remorqués par un navire principal, et un ou plusieurs bateaux secondaires auto-propulsés télécommandés depuis le navire. Les bateaux secondaires sont des planeurs sous-marins à moteurs électriques, lesquels moteurs sont alimentés par câble depuis le navire. Le système est bien adapté lorsque le navire et ses satellites suivent sensiblement des sources parallèles très voisines.

Le système selon l'invention permet la conduite d'opérations marines telles que des opérations sismiques. Comme le système décrit au document US-A-3 906 352 précité, il comporte un navire de surface auquel est associée une partie d'un ensemble d'émission et de réception d'ondes acoustiques et au moins un véhicule secondaire de surface à propulsion autonome auquel est associée une autre partie dudit ensemble démission et de réception d'ondes acoustiques, le système comportant des moyens de navigation incluant un radar disposé sur le navire pour repérer la position de chaque véhicule secondaire relativement au navire et pour déterminer la position dudit navire, et un dispositif de télécommande par radio adapté à élaborer des signaux de cap et de vitesse, à les transmettre et à les appliquer à chaque véhicule secondaire, lequel dispositif comporte un premier ensemble sur le navire incluant un premier moyen de traitement programmable qui est connecté à un premier moyen d'émission-réception radio, et également un deuxième ensemble sur chaque véhicule secondaire incluant un deuxième moyen de traitement programmable pour mettre en forme les messages à échanger avec ledit premier ensemble en coopération avec un deuxième moyen d'émission-réception radio.

Les caractéristiques distinctives du système selon l'invention sont définie par la partie caractérisante de la revendication 1.

Le dispositif de commande permet, depuis un navire adapté par exemple à la prospection sismique marine, de faire manoeuvrer à volonté un ou plusieurs bateaux de faible tonnage sans équipage de manoeuvre et même éventuellement inhabités, et les moyens de communication par radio permettent de regrouper, dans un dispositif d'enregistrement unique installé sur le navire, un ensemble de données sismiques captées par une ou plusieurs flûtes sismiques tractées par les bateaux télécommandés, la transmission étant effectuée par exemple en temps réel.

Le système selon l'invention permet d'obtenir à la fois rapidité, précision et souplesse dans la conduite des opérations sismiques, quelle que soit leur complexité, comme on le verra de manière plus détaillée dans le cours de la description ci-après et en se référant aux dessins annexés où:

la figure 1 représente schématiquement le navire principal et un véhicule de surface,

la figure 2 représente un vue schématique d'une partie disposée sur le navire, du dispositif

2

de télécommande et du dispositif de navigation, adaptée au guidage automatique de chacun des véhicules,

la figure 3 représente une vue schématique d'une partie complémentaire de ces mêmes dispositifs installée sur chacun des véhicules et une partie d'un dispositif de télécommande à vue ou rapprochée,

la figure 4 représente un boîtier de télécommande du dispositif de télécommande rapprochée, disposé à bord du navire principal,

la figure 5 représente l'ensemble d'acquisition et de transmission des données sismiques ou océanographiques, disposé à bord de chaque véhicule, et

la figure 6 représente l'ensemble de réception et d'enregistrement des données sismiques ou océanographiques émises depuis les véhicules.

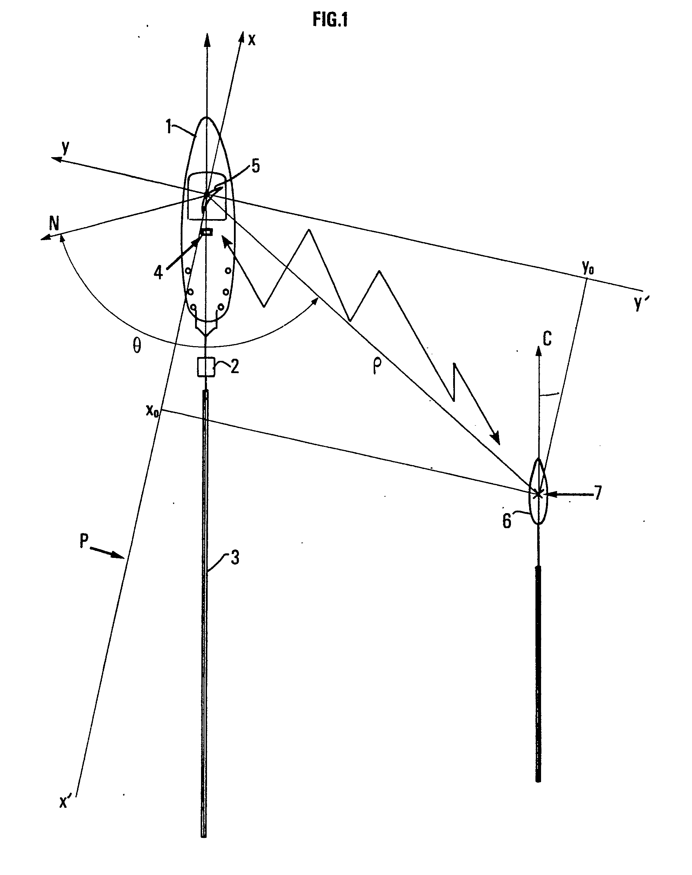

Selon la figure 1, le système de conduite d'opérations marines et en particulier d'opérations sismiques comporte un navire de surface 1 équipé par exemple pour tracter en immersion un ensemble d'émission-réception constitué d'au moins une source d'impulsions acoustiques 2 telle que celles décrites dans les brevets français 1.583.773 et 2.272.465 ou la demande de brevet français publiée 2.558.600, cette source étant éventuellement associée à une flûte sismique d'un type connu 3, celle décrite dans le brevet français 2.471.088 par exemple.

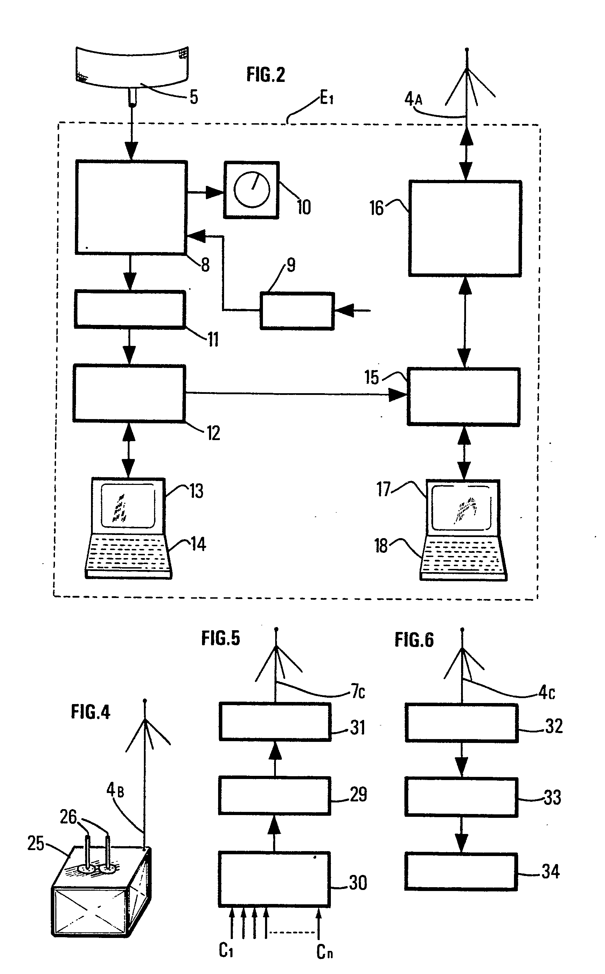

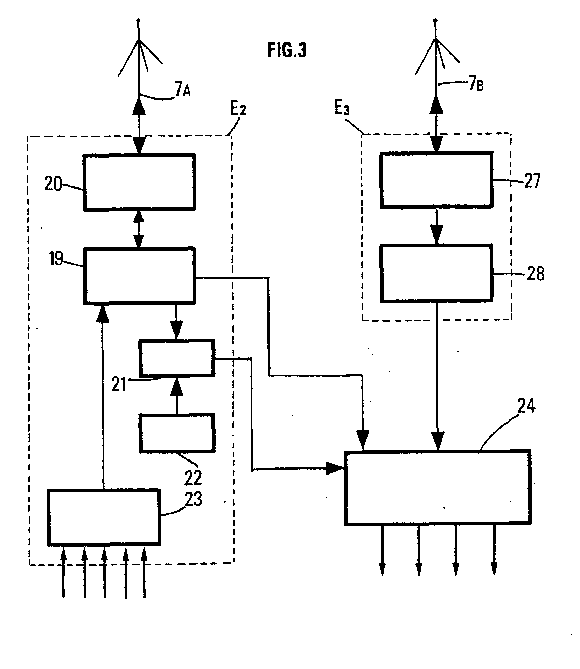

Le navire est muni d'antennes 4, 5 reliées respectivement à un dispositif de transmission radio et à un radar décrits plus en détail par la suite en relation avec la figure 2.

Le système comporte également un ou plusieurs véhicules de surface 6 constitués par exemples de bateaux de faible tonnage et de faible tirant d'eau tels que des vedettes.

Ces bateaux sont eux aussi munis d'antennes 7 reliées à des moyens de transmission d'ondes hertziennes (Figs. 3, 5). Ils sont propulsés par exemple par des moyens d'éjection d'eau sous pression ou hydrojets d'un type connu pouvant pivoter par rapport à la coque.

Les tuyères d'évacuation de l'eau sous pression sont alimentées de manière classique par une turbine entrainée en rotation par un moteur diesel. Ce mode de propulsion sans hélice ni gouvernail lui permet de passer sans dommage sur des câbles ou des éléments de flûte sismique.

Les organes de manoeuvre agissant sur la vitesse de rotation du moteur et sur la direction des jets d'eau propulseurs, sont actionnés par des vérins alimentés en huile sous pression par un système hydraulique couplé avec le moteur diesel d'entrainement, par l'intermédiaire d'électrovannes, comme il est bien connu des spécialistes. Les moyens de commande de ces électro-vannes font partie des dispositifs de navigation et de télécommandes représentés aux figures 2 et 3 et décrits ci-après.

Le dispositif de télécommande associé au dispositif de navigation est adapté à la conduite automatique d'opérations de repérage et de télécommande à longue portée d'une ou plusieurs vedettes. Le dispositif de télécommande est agencé également pour assurer la télécommande rapprochée ou à vue de ces mêmes vedettes, pour les manoeuvres de mise à l'eau et de relevage des parties du dispositif d'émission-réception qui leur sont associés.

La conduite automatique des opérations de repérage et de télécommande est assurée par un premier ensemble $E_1$ (Fig. 2) disposé sur le navire principal et par des ensembles secondaires $E_2$ (Fig. 3) disposés respectivement sur les vedettes.

Le premier ensemble $E_1$ assure les fonctions de repérage de la position relative des véhicules secondaires 6 par rapport au navire 1 et de commande automatique, ce qui permet de leur imposer des paramètres de navigation et de les maintenir sur des trajectoires définies qu'il s'agisse de trajectoires asservies en position relative fixe ou de trajectoires à mouvements différents.

Le premier ensemble $E_1$ comporte (Fig. 2) un radar numérique 8 d'un type connu coopérant avec un gyro-compas 9 pour donner sous forme numérisée en coordonnées polaires les valeurs de distance p et de gisement θ des véhicules par rapport à la direction du nord N (Fig. 1). Le radar 8 est associé à un écran de visualisation I0.

Les mesures sont faites par le radar à partir des échos des véhicules de surface ou bien pour les distances plus grandes, à partir des signaux codés transmis par un répondeur radar, en réponse aux impulsions reçues du navire principal.

Les mesures faites par le radar 8 et les données du gyro-compas 9 sont transmises par l'intermédiaire d'un élément d'interface 11, à un calculateur 12. Ce calculateur comporte des moyens de mémorisation de plusieurs valeurs numériques successives des paramètres associés à chaque écho, qui lui sont transmises par le radar 8, et des éléments pour effectuer des moyennes, de manière à éliminer les mesures aberrantes, comme il est bien connu des spécialistes.

Il comporte également des moyens pour déterminer les coordonnées cartésiennes $(x_0, y_0)$ de chaque véhicule 6 par rapport à un système d'axes orthogonaux, l'un de ces axes x', x étant dirigé suivant la trajectoire assignée P (Fig. 1), ainsi que le sens de la variation des écarts. Les données calculées sont affichées sur un écran graphique 13.

Une console 14 connectée au calculateur 12, permet de fixer les consignes à partir desquelles il élabore des ordres de cap et de vitesse à transmettre à chaque vedette 6.

Ces consignes sont par exemple des valeurs de cap et de vitesse à tenir et/ou une loi de traitement des écarts constatés pour chaque véhicule entre la position mesurée et la position de consigne.

Suivant la loi choisie, on impose au véhicule écarté de sa route un certain type de rattrapage, comme il est bien connu en matière d'asservissement. Les ordres de changement de cap ou d'allure sont imposés depuis la console 14 et depuis la console 18.

Le calculateur 12 élabore des ordres de cap et de vitesse, à partir des données mesurées et imposées et les applique à un second calculateur programmable 15. Celui-ci est connecté à un ensemble d'émission-réception d'ondes de radio 16 lequel est relié à une des antennes 4A.

Le calculateur 15 est également connecté à un écran graphique 17 associé à une console de commande 18. Le calculateur 15 met en forme et valide les messages à envoyer et les messages reçus.

Les mots numériques constituant les messages sont mis sous forme série avant d'être transmis et inversement les mots numériques reçus sont mis sous forme parallèle pour leur exploitation.

Le calculateur 15 code éventuellement les messages à transmettre à chaque vedette et leur associe des mots numériques d'adresses pour désigner le véhicule auquel ils sont transmis. Inversement, il décode et transforme les signaux reçus pour identifier chaque vedette transmetteuse et gère l'affichage sur l'écran 17 des signaux d'acquittement envoyés par chaque vedette.

Les messages reçus de chaque véhicule concernent par exemple l'état de ses différents organes: batteries d'accumulateurs, carburant, feux de navigation, paramètres traduisant le fonctionnement des moteurs, etc, ou encore sont des signaux d'alarme.

Les messages envoyés à chaque véhicule concernent les consignes de cap et de vitesse élaborés par le premier calculateur 12, et aussi des ordres pour d'autres appareils et en particulier l'appareillage sismique ou océanographique installé sur ou tracté par la vedette.

Tous les messages transmis et reçus sont affichès sur le terminal graphique 17. La console de commande 18 permet de poser des questions de manière à obtenir de telle ou telle vedette des informations d'état particulières. Elle permet également d'imposer directement des ordres relatifs à la vitesse ou au cap, à la place du premier calculateur 12.

L'ensemble secondaire $E_2$ disposé sur chacune des vedettes pour conduire les opérations de télécommande en combinaison avec l'ensemble $E_1$, comporte (Fig. 3) un calculateur 19 échangeant des données avec le calculateur 15 et l'émetteur-récepteur 16 associés de l'ensemble $E_1$ (Fig. 2), par l'intermédiaire d'un élément d'émission-réception 20 d'ondes de radio associé à une antenne 7A.

Le calculateur 19 met en forme les messages reçus ou à envoyer. Il transforme les mots numériques qui les constituent en une succession de bits (transformation parallèle-sèrie) pour leur transmission, fait la transformation inverse pour les message reçus, et valide les messages qui le concernent, par décodage des mots d'adresse associés.

Le calculateur 19 transmet les consignes de cap reçues du navire principal, à un pilote automatique 21. Celui-ci reçoit d'un compas 22 disposé sur la vedette les indications du cap suivi et, par comparaison avec les valeurs de consigne, élabore des signaux de correction.

Le calculateur 19 est connecté à un élément d'interface 23, lequel est connecté à une pluralité de capteurs (non représentés) fournissant des signaux d'état et d'alarme à transmettre au navire principal.

Le calculateur 19 et le pilote automatique 21 sont connectés à un coffret 24 contenant un ensemble de relais permettant d'actionner les différents organes de la vedette. Les électro-vannes déjà mentionnées qui contrôlent les vérins hydrauliques servant à actionner la barre de la vedette, sont commandées par le pilote automatique. Les relais contrôlant l'action des moteurs et des autres organes de navigation sont commandés directement par le calculateur 19.

Le système de télécommande rapproché qui permet la commande directe à vue des vedettes depuis le navire, comporte (Fig. 4) un ou plusieurs boitiers de commande 25 d'un type connu comportant des moyens de formation de signaux de commande en réponse aux déplacements de manettes 26 et un émetteur d'ondes radio associé à une antenne 4B.

Les signaux émis par chaque boitier 25 sont reçus à bord d'une vedette par un ensemble $E_3$ comportant (Fig. 3) une antenne 78 associée à un récepteur de radio 27. Les messages détectés par le récepteur 27 sont remis en forme par un élément d'interface 28 et sont appliqués directement au coffret à relais 24 de manière à commander directement les évolutions de la vedette.

Quand on décide de passer en mode de commande directe, des ordres sont transmis au calculateur 19 par l'intermédiaire de la console de commande 18 (Fig. 2) pour interrompre momentanément certaines communications directes entre l'ensemble secondaire $E_2$ et le coffret à relais 24.

Le calculateur 21 est agencé pour appliquer des consignes de sécurité si les liaisons radio cessent momentanément entre le navire et la vedette. Ces consignes ont pour objet de mettre les moteurs au ralenti et de conserver le cap jusqu'au rétablissement des transmissions.

Un ensemble d'émission disposé sur chaque vedette assure la transmission des données de gèophysique ou des données océanographiques collectées par les appareils associés à celle-ci. Ces données sont reçues par un ensemble de réception disposé sur le navire principal.

L'ensemble d'émission comporte (fig. 5) un élément d'interface 29 adapté à mettre en forme les signaux numérisés fournis par une chaîne 30 d'acquisition de signaux reliée à une pluralité de capteurs $C_1...C_n$ et un émetteur de radio 31 connecté à une antenne 7C.

L'ensemble de réception comporte (fig. 6) un récepteur de radio 32 relié à une antenne 4C, un élément d'interface 33 pour remettre en forme les signaux transmis avant de les transmettre à un laboratoire central d'enregistrement 34. Les coordonnées du navire principal et de chacune des vedettes peuvent être mémorisées sur une trace auxiliaire du laboratoire d'enregistrement, de manière à faciliter les traitements ultérieurs des signaux sismiques ou océanographiques.

Les dispositifs automatiques de repérage et de télécommande permettent de conduire les évolutions de plusieurs véhicules de surface jusqu'à cent kilomètres et beaucoup plus si c'est nécessaire. La portée du système de télécommande à vue ou rapprochée est de l'ordre de plusieurs kilomètres.

Le système est particulièrement souple et se prête à de nombreuses applications du fait de l'absence de liens matériels entre le navire principal et chacune des vedettes.

Les méthodes de prospection requérant l'utilisation de plusieurs flûtes sismiques tractées parallèlement sont faciles à mettre en oeuvre.

Le système de conduite d'opérations selon l'invention permet de tracter une flûte principale et une ou plusieurs flûtes sismiques supplémentaires suivant des configurations très diverses en fonction des applications recherchées. Les vedettes peuvent remorquer les flûtes supplémentaires avec un déport latéral et longitudinal quelconque par rapport à la route du navire principal.

Elles peuvent le précéder ou le suivre sur des trajectoires parallèles ou non parallèles, et évoluer éventuellement sur la même route, devant ou derrière. La quantité de données obtenues au cours d'un même tir par l'utilisation de plusieurs flûtes sismiques déportées les unes par rapport aux autres est augmentée considérablement.

Les opérations de prospection sismique par réfraction consistant à laisser à poste fixe, un capteur sismique ou une pluralité de capteurs sismiques disposés à la verticale les uns au dessous des autres, tandis que le navire remorquant la source sismique (navire boutefeu) s'éloigne, sont faciles à réaliser avec le système revendiqué. Les capteurs sismiques sont reliés à une ou plusieurs vedettes qui stationnent pendant la durée des mesures et lui transmettent les signaux qu'ils captent. Ces signaux sont transmis en temps réel au navire principal par radio. Puis les vedettes sont télécommandées de manière à rejoindre un nouvel emplacement et s'y arrêter le temps de positionner de nouveau les capteurs à la verticale et d'effectuer des mesures. On peut pratiquer ces mêmes opérations avec plusieurs vedettes, certaines étant disposées devant le navire principal, d'autres derrière celui-ci.

Une vedette tractant une flûte sismique horizontale peut être télécommandée de manière à suivre le navire principal à distance constante, mais assez loin derrière. Ceci permet de suivre l'évolution d'une caractéristique du sous-sol remarquée sur les enregistrements de signaux sismiques réfractés.

Il existe aussi une grande variété d'applications du système de conduite selon l'invention, dans le domaine de la prospection sismique par réflexion.

Des contrôles et essais peuvent être réalisés en commandant par exemple à une vedette qui tracte un hydrophone immergé de passer en avant du navire principal, celui-ci remorquant une source sismique ou un ensemble de sources sismiques, de manière que ledit hydrophone soit à une certaine distance verticale au dessous de celle-ci au moment de leurs déclenchements et capte les signaux qu'elles émettent.

La sensibilité des différents capteurs d'une flûte sismique peut facilement être testée en commandant à une vedette qui traine derrière elle une source sismique vibratoire ou impulsionnelle de faible puissance, de la faire passer au-dessus de la flûte.

L'utilisation conjointe d'une flûte sismique tractée par le navire principal et d'au moins une seconde flûte tractée par une vedette, conduit à des résultats intéressants.

Si l'on combine les traces d'enregistrement associées à une flûte principale à celles d'une seconde flûte et éventuellement d'une troisième, tractées l'une derrière, l'autre devant la flûte principale, on obtient des résultats analogues à ceux d'une flûte allongée en ce qui concerne la finesse dans l'analyse des vitesses.

Une flûte secondaire tractée parallèlement à la flûte principale, permet de recueillir des signaux, en particulier dans l'espace entre la poupe du navire principal et la téte de celle-ci et par conséquent de restituer des horizons à faible profondeur.

Une seconde flûte peut être également tractée devant le navire principal et disposée symétriquement à la première par rapport aux sources.

Le système de conduite selon l'invention se prête bien aussi aux applications nécessitant des déports latéraux.

Une ou plusieurs vedettes remorquant chacune une flûte sismique (ou éventuellement plusieurs maintenues écartées les unes des autres par des dispositifs tels que celui décrit dans le brevet français 2.296.562) peuvent naviguer parallèlement et transmettre au navire principal des données sismiques relatives à plusieurs profils sismiques parallèles, ce qui permet d'obtenir une meilleure restitution en volume et une vitesse d'exploitation accrue (sismique multi-profils). Un ensemble de plusieurs sources déportées les unes par rapport aux autres peut être combiné avec le dispositif de réception multi-flûtes précédent.

Une combinaison des techniques de prospection sismique par réflexion et par réfraction peut également être opérée avec des sources appropriées, en utilisant une ou plusieurs vedettes.

On peut par exemple mettre en oeuvre une technique d'utilisation connue par les géophysiciens sous le nom de ESP (expanded seismic profile, en anglais) en faisant remorquer une flûte sismique et une source respectivement par le navire principal et une vedette et en leur donnant des trajectoires symétriques par rapport à un point milieu.

La souplesse du système de conduite selon l'invention, liée à l'utilisation de vedettes télécommandées à faible tirant d'eau et très maniables, est particulièrement avantageuse dans toutes les applications où l'on opère dans des zones encombrées, soit par d'autres navires, soit par des obstacles naturels ou artificiels.

**Revendications**

1. Système pour la conduite d'opérations marines telles que des opérations sismiques, comportant un navire (1) de surface auquel est associée une partie d'un ensemble d'émission et de réception d'ondes acoustiques et au moins un véhicule secondaire (6) de surface à propulsion autonome auquel est associée une autre partie dudit ensemble d'émission et de réception d'ondes acoustiques, le système comportant des moyens de navigation incluant un radar (5, 8, 10) disposé sur le navire (1) pour repérer la position de chaque véhicule secondaire (6) relativement au navire (1) et pour déterminer la position dudit navire, et un dispositif de télécommande par radio adapté à élaborer des signaux de cap et de vitesse, à les transmettre et à les appliquer à chaque véhicule secondaire (6), ledit dispositif comportant un premier ensemble (E1) sur le navire (1) incluant un premier moyen de traitement programmable (15, 17, 18) qui est connecté à un premier moyen d'émission-réception radio (16), et comportant également un deuxième ensemble (E2) sur chaque véhicule secondaire (6) incluant un deuxième moyen de traitement programmable (19) pour mettre en forme les messages à échanger avec ledit premier ensemble (E1) en coopération avec un deuxième moyen d'émission-réception radio (20), caractérisé en ce que:

les moyens de navigation coopèrent avec un troisième moyen de traitement programmable (12-14) inclus dans ledit premier ensemble (E1), pour élaborer des signaux de cap et de vitesse à imposer à chaque véhicule secondaire (6) à partir des échos fournis par le radar et en fonction des lois d'asservissement imposées, en ce que

le dispositif de télécommande par radio surveille l'état des èquipements de chaque véhicule secondaire (6), ledit premier moyen de traitement programmable (15, 17, 18) étant connecté audit troisième moyen de traitement programmable (12-14) pour mettre en forme et coder les messages à envoyer à chaque véhicule secondaire (6) et pour mettre en forme et décoder les messages recus de celui-ci, et ledit deuxième ensemble (E2) conduisant les opérations télécommandées sous le contrôle dudit premier ensemble (E1), et en ce que

le dispositif de télécommande par radio comporte un moyen de pilotage automatique (21) connecté audit deuxième moyen de traitement programmable (19) et situé dans ledit deuxième ensemble (E2), pour engendrer des signaux d'erreur, des moyens de commutation (24) pour l'application d'énergie aux èléments de navigation sur chaque véhicule secondaire (6) incluant les moyens de propulsion desdits véhicules, ledit deuxième ensemble (E2) incluant un élément d'interface (23) pour l'adaptation de signaux d'état et d'alarme émanant des différents capteurs à bord de chaque véhicule secondaire (6) avant leur application audit deuxième moyen de traitement programmable (19) et leur transmission audit premier moyen de traitement programmable (15, 17, 18) sur ledit navire (1).

2. Système selon la revendication 1, caractérisé en ce qu'il comporte un boîtier de commande (25) pour le guidage à vue de chaque véhicule secondaire (6) incluant un moyen pour former des signaux de commande et un émetteur radio, et un troisième ensemble (E3) sur chaque véhicule secondaire pour la commande directe desdits moyens de commutation (24) par application audit deuxième moyen de traitement programmable (19) par l'intermédiaire du premier moyen de traitement programmable (15, 17, 18), de signaux d'interruption des communications directes entre ledit deuxième ensemble (E2) et les moyens de commutation (24), ledit troisième ensemble (E3) incluant un récepteur radio (27) et un élément d'interface (28) pour l'adaptation des signaux de commande reçus à appliquer auxdits moyens de commutation (24).

**Patentansprüche**

1. System zur Ausführung von Operationen wie seismischen Operationen auf See mit einem überwasserschiff (1), dem ein Teil einer Sende- und Empfangsanordnung für akustische Wellen zugeordnet ist und mit wenigstens einem sekundären Oberflächenschiff (6) mit eigenem Antrieb, dem ein anderer Teil dieser Sende- und Empfangsanordnung für akustische Wellen zugeordnet ist, wobei das System Navigationsmittel einschließlich eines auf dem Schiff (1) angeordneten Radars (5, 8, 10) aufweist, um die Position jedes Sekundärfahrzeuges (6) relativ zum Schiff (1) zu markieren und um die Position dieses Schiffes zu bestimmen und mit einem Funkfernsteuergerät derartiger Ausbildung, daß es Kurs- und Geschwindigkeitssignale erarbeitet, sie überträgt und damit jedes Sekundärfahrzeug (6) beaufschlagt, wobei das Gerät eine erste Anordnung (E1) auf dem Schiff (1) mit einem ersten programmierbaren Verarbeitungsmittel (15, 17, 18) umfaßt, das mit einem ersten Funk-, Sende- und Empfangsmittel (16) verbunden ist und darüber hinaus eine zweite Anordnung (E2) auf jedem Sekundärschiff (6) mit einem zweiten programmierbaren Verarbeitungsmittel (19) umfaßt, um die mit der ersten Anordnung (E1) auszutauschenden Nachrichten aufzubereiten, im Zusammenwirken mit einem zweiten Funk-, Sende- und Empfangsmittel (20), dadurch gekennzeichnet, daß:

die Navigationsmittel mit einer dritten programmierbaren Verarbeitungseinrichtung (12-14) zusammenwirken, eingeschlossen in dieser ersten Anordnung (E1), um Kurs und Geschwindigkeitssignale zu erarbeiten, damit jedes Sekundärfahrzeug (6) ausgehend von Echos beaufschlagt wird, die vom Radar und als Funktion der angelegten Störungs- oder Regelungsgesetze geliefert wurden, daß

das Funkfernsteuergerät den Zustand der Ausrüstungs(geräte) jedes Sekundärfahrzeuges (6) überwacht, wobei das erste programmierbare Verarbeitungsmittel (15, 17, 18) mit dem dritten programmierbaren Verarbeitungsmittel (12, 14) verbunden ist, um die jedem Sekundärfahrzeug (6) zu schickenden Nachrichten aufzubereiten und zu codieren und die von diesem empfangenen Nachrichten aufzubereiten und zu decodieren, wobei die zweite Anordnung (E2) die ferngesteuerten Operationen unter der Regelung dieser ersten Anordnung (E1) durchführt und daß

das Funkfernsteuergerät ein Hilfssteuermittel (21) umfaßt, das mit diesem zweiten programmierbaren Verarbeitungsmittel (19) verbunden ist und in dieser zweiten Anordnung (E2) angeordnet ist, um Fehlersignale zu erzeugen, Mittel zum (Um)schalten (24) zum Anlegen von Energie an die Navigationselemente auf jedem Sekundärschiff (6) einschließlich der Antriebsmittel dieser Schiffe, wobei diese zweite Anordnung (E2) ein Interfaceelement (23) zur Anpassung der Zustands- und Alarmsignale umfaßt, die aus den verschiedenen Aufnehmern an Bord jedes Sekundärfahrzeuges (6) stammen, bevor sie an dieses zweite programmierbare Verarbeitungsmittel (19) gelegt werden und sie an dieses erste programmierbare Verarbeitungsmittel (15, 17, 18) auf diesen Schiff (1) übertragen werden.

2. System nach Anspruch 1, dadurch gekennzeichnet, daß es ein Steuergehäuse (25) umfaßt, um auf Sicht jedes Sekundärfahrzeuges (6) zu führen mit einem Mittel zum Formen der Steuersignale und einem Funksender sowie einer dritten Anordnung (E3) auf jedem Sekundärschiff zur direkten Steuerung dieser Umschaltmittel (24), um an dieses zweite programmierbare Verarbeitungsmittel (19) vermittels des ersten programmierbaren Verarbeitungsmittels (15, 17, 18) Unterbrechersignale für die direkten Verbindungen zwischen dieser zweiten Anordnung (E2) und den Umschalteinrichtungen (24) zu legen, wobei die dritte Anordnung (E3) einen Funkempfänger (27) und ein Inferfaceelement (28) für die Anpassung der empfangenen Steuersignale einschließt, die an diese Umschaltmittel (24) gelegt werden sollen.

## Claims

1. A system for carrying out marine operations, such as seismic surveys, comprising a surface vessel (1) associated with part of a unit for the transmission and reception of sound waves and at least one secondary self-propelled surface vehicle (6) associated with another part of the said unit for the transmission and reception of sound waves, the system comprising a means of navigation including a radar system (5, 8, 10) located on the vessel (1) in order to identify the position of each secondary vehicle (6) relative to the vessel (1) and in order to determine the position of the said vessel, together with a remote control radio device designed to prepare signals relating to the course and speed, transmit these and apply them to each secondary vehicle (6), the said device comprising a first unit (E1) on the vessel (1) and including a first means of programmable data processing (15, 17, 18) which is connected to a first radio transmission-reception unit (16) and also including a second unit (E2) on each secondary vehicle (6) which includes a second means of programmable data processing (19) to convert the messages to be exchanged with the said first unit (E1) in co-operation with a second radio transmission-reception unit (20), characterised in that:

the navigation device co-operates with a third means of programmable data processing (12—14) included in the said first unit (E1) in order to prepare signals relating to the course and speed to be imposed on each secondary vehicle (6) from echoes provided by the radar system and in terms of the servo control conditions imposed and in that:

the remote control radio device monitors the status of the equipment for each secondary vehicle (6), the said first means of programmable data processing (15, 17, 18) being connected to the said third means of programmable data processing (12—14) in order to convert and code the messages to be transmitted to each secondary vehicle (6) and to convert and decode the messages received from this unit and the said second unit (E2) carrying out the remote control operations under the control of the said first unit (E1) and in that:

the remote control radio device includes an automatic pilot (21) connected to the said second means of programmable data processing (19) and situated in the said second unit (E2) in order to generate error signals, a means of switching (24) for the application of power to the navigation devices on each secondary vehicle (6), including the propulsion units for the said vehicles, the said second unit (E2) including an interface unit (23) for converting the status and alarm signals transmitted by the various sensors on board each secondary vehicle (6) before their application to the said second means of programmable data processing (19) and their transmission to the said first means of programmable data processing (15, 17, 18) on the said vessel (1).

2. System in accordance with claim 1, characterised in that it comprises a control unit (25) for guiding each secondary vehiclee (6) when in view, including a means for establishing control signals and a radio transmitter, together with a third unit (E3) on each secondary vehicle for direct control of the said means of switching (24) by application to the said second means of programmable data processing (19) through the intermediary of the first means of programmable data processing (15, 17, 18), signals to interrupt direct communications between the said second unit (E2) and the means of switching (24), the said third unit (E3) including a radio receiver (27) and an interface unit (28) for converting the control signals received and applying these to the said means of switching (24).

FIG.1

EP 0 188 928 B1

FIG.2

FIG.4

FIG.5

FIG.6

FIG.3